Europäisches Patentamt

European Patent Office

Office européen des brevets

(11) Publication number: **0 321 608 B1**

# EUROPEAN PATENT SPECIFICATION

(45) Date of publication of patent specification: **12.08.92**  (51) Int. Cl.⁵: **G01G  19/02**, G01G 21/22

(21) Application number: **87202308.0**

(22) Date of filing: **22.12.87**

(54) **Prefabricated and dismountable weighbridge.**

(43) Date of publication of application:
**28.06.89 Bulletin  89/26**

(45) Publication of the grant of the patent:
**12.08.92 Bulletin  92/33**

(84) Designated Contracting States:
**AT BE CH DE ES FR GB GR IT LI LU NL SE**

(56) References cited:
EP-A- 0 097 734        DE-A- 3 330 532
FR-A- 1 094 780        FR-A- 2 576 335
GB-A- 2 076 977        US-A- 2 962 275
US-A- 3 797 593        US-A- 4 281 728

(73) Proprietor: **Webotec B.V.**
**Teteringsedijk 73 Postbus 9368**
**NL-4801 LJ Breda(NL)**

(72) Inventor: **Van Leijsen, Cornelis Gerardus**
**Rumoldus**
**Papaverstraat 1**
**NL-5102 ZE Dongen(NL)**

(74) Representative: **Van Assen, Jan Willem Ber-**
**nard**
**ASSENPATENT B.V., Octrooibureau Van As-**
**sen, Konijnenlaan 45/a**
**NL-2243 EP Wassenaar(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a prefabricated and dismountable weighbridge for weighing vehicles comprising a platform assembled from at least partially prefabricated concrete elements and ramps arranged on a workfloor.

A weighbridge of this type in known from Patent Specification FR-A-2.575.335. In this specification the bridge is made entirely of concrete elements joined by pin-and-hole couplings which are locked in position with the aid of prestressed lateral bars.

The object of the invention is to provide a weighbridge of the type defined in the preamble which is easy to assemble and to disassemble so that it can be reassembled at another location, which is sufficiently stable to enable calibrating measurement results to be obtained, and which leaves only a small residue after disassembly so that it is minimally hazardous for the environment.

According to the invention, this object is achieved by a number of short prefabricated concrete foundation elements which are arranged at regular intervals on a foundation layer, on which foundation layer a steel supporting construction is arranged and in which construction the elements are arranged and whereby weighing means are accommodated between the underside of the construction and the upper side of the foundation elements.

By the application of the invention it is possible to prefabricate all of the parts through which the accuracy thereof is improved and the assembly time on site is reduced. In addition hereto, a more stable bridge-platform is obtained by the combination of a steel supporting construction and a concrete upper layer of elements more lighter in weight and which will permit calibrating measurements to be obtained.

Furthermore, the bridge construction as a whole can be easily taken away after use without damage to the environment. Finally the foundation can also comprise prefabricated elements which can be quickly removed after use and used in some other place. According to a preferred embodiment of the invention, the steel supporting construction can be a framework assembled from two main longitudinal steel beams which are arranged on each side of the concrete foundation elements and in which a number of steel crossbeams are fixed at regular intervals between the main longitudinal beams.

This construction can be made in a factory with great accuracy and thereafter large preassembled units can be transported to the place of installation where they can be placed into position by a crane or suchlike and fitted together. They can be dismounted again by a crane and transported away in large units.

The invention will now be described further with reference to the accompanying drawings of an embodiment of the invention which does not limit its scope and in which:

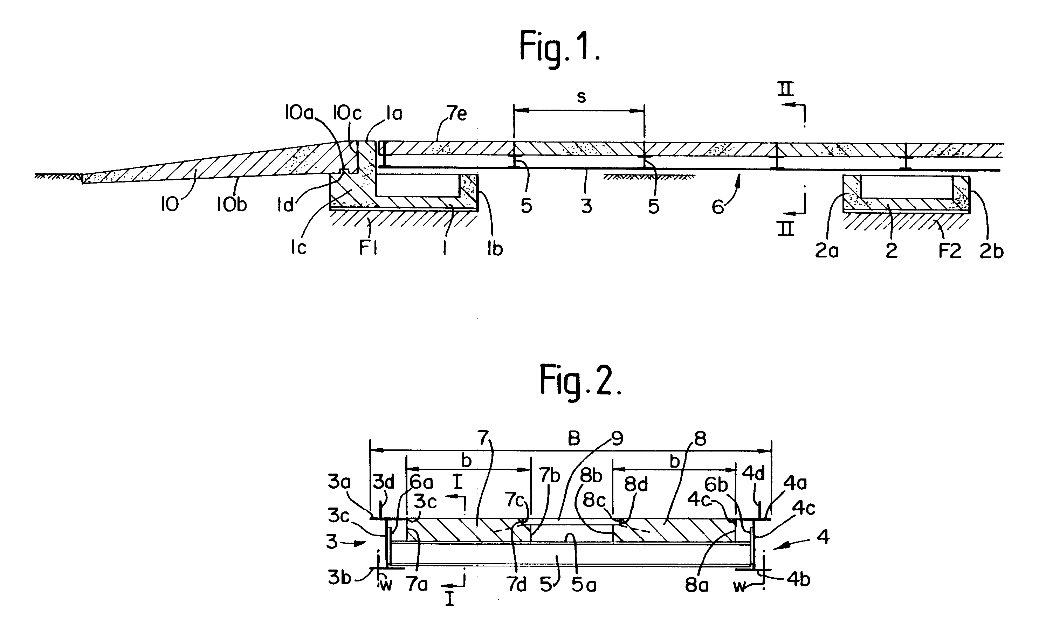

Fig.1. shows a weighbridge according to the invention in part longitudinal cross-section along line 1-1 of fig.2. Fig.2. shows a transverse cross-section of the weighbridge along line II-II of fig.1 on a larger scale. The weighbridge shown in the drawings comprises three prefabricated concrete foundation elements of which only 1 and 2 are shown in fig.1. These foundation elements 1 and 2 have a cross-section of 'U' form and are fixed to short prefabricated workfloors F1 and F2. These workfloors each comprise a slab of stabilised sand or concrete mixture. The outermost foundation element 1 has legs of unlike length with a longer outer leg 1a and a shorter inner leg 1b. In contrast to this, the middle one of the foundation elements has legs 2a and 2b of equal lengths. A steel supporting structure is arranged on the foundation elements 1 and 2 which is designated in its entirety by the reference numeral 6. This supporting construction 6 is supported in turn by suitable weighing means W (not shown). These weighing means W, which do not form part of the invention, are accomodated in the intermediate space which is visible in fig.1 between the underside of the supporting construction 6 and the upper side of the foundation elements 1 and 2. The weighing means W are also schematically shown in fig.2. on the lowermost outer longitudinal sides of the supporting construction 6.

Preferably, the supporting construction 6 is a framework assembled from two main longitudinal steel beams 3 and 4 which are arranged on each side of the concrete foundation elements 1 and 2, and it further comprises a number of steel crossbeams 5 which are fixed at regular intervals S between the main longitudinal beams 3 and 4.

In the embodiemt shown, the main longiudinal steel beams 3 and 4 have a cross-section of 'I' form whilst the steel crossbeams also have a cross-section of'I' form but which is smaller than that of the main steel longitudinal steel beams 3 and 4. Through this difference in the size of the cross-section, the upper flange 5a of the 'I' section crossbeams 5 lie at some distance below the upper flanges 3a and 4a of the main longitudinal steel beams 3 and 4. The beams 3, 4 and 5 are fixed together by the interposition of fishplates 6a and 6b in a suitable manner, by nuts and bolts for example. A number of extending prefabricated concrete tracks 7 and 8 with a width b smaller than the width B of the weighbridge are arranged on the steel crossbeams 5, These form the lanes for the passage of vehicles (not shown) thereover. These tracks 7,8 lie with outer longitudinal sides 7a and 8a against the inner longitudinal sides 3c and 4c of the main longitudinal steel beams 3 and 4. The uppermost sides of the tracks 7,8 preferably lie at the same height at the upper flanges 3a, 4a of the main longitudinal beams and by which means as wide as possible traffic lanes are obtained. Vertically standing steel safety-guards 3d and 4d are purposely welded to the upper flanges 3a and 4a of the longitudinal beams 3 and 4 to fence off the sides of the traffic lane. Furthermore, the overlong prefabricated concrete tracks 7 and 8 are provided with extending recesses 7c and 8c in the innermost longitudinal sides 7b and 8b thereof respectively for accomodating steel gratings 9 (shown in dashed lines) to give easy access for purposes of inspection and maintenance. The gratings lie in cast-in angle-irons 7d, 8d. As shown in fig. 1, the uppermost side of the longer leg 1a of the element 1 abuts with the uppermost dides 7e, 8e of the tracks 7, 8.

Furthermore, the outer ends of the outermost foundation element 1has an extending piece which serves as a ramp 10. Preferably, the upperside of the extending portion 1c has a latching element 1d for locking into a corresponding latching element 10a on the underside of the innermost end of the prefabricated ride-on/ride-off ramp 10.

These prefabricated ride-on/ride-off ramps have a longitudinal cross section in the form of a right-angled trapezium the base 10b of which is placed on the ground whilst the upperside of the short right-angled side 10c of the upperside of both the long leg 1a of the outermost foundation element 1 and the uppersides 7e, 8e of the concrete tracks 7,8 are arranged together.

## Claims

1. A prefabricated and dismountable weighbridge for weighing vehicles comprising a platform assembled from at least partially prefabricated concrete elements (7,8) and ramps (10) arranged on a workfloor, whereby a number of short prefabricated concrete foundation elements (1,2) are arranged at regular intervals on a foundation layer (F1,F2), on which foundation layer (1,2) a steel supporting construction (3,4,5) is arranged and in which construction (3,4,5) the elements (7,8) are arranged and whereby weighing means are accommodated between the underside of the construction (3,4,5) and the upper side of the foundation elements (1,2).

2. A weighbridge as claimed in claim 1 characterised in that the supporting construction (2,3,4,5) is a framework assembled from two main longitudinal steel beams (3,4) arranged on each side of the concrete foundation elements (1,2), a number of steel crossbeams (5) fixed at regular intervals S between the main longitudinal beams (3,4).

3. A weighbridge as claimed in claim 1 or claim 2 characterised in that the short prefabricated concrete foundation elements (1,2) have a longitudinal cross-section of 'U' form.

4. A weighbridge as claimed in any one of claims 1 to 3 inclusive characterised in that the main longitudinal steel beams (3,4) have a cross-section of 'I' form.

5. A weighbridge as claimed in any one of the foregoing claims characterised in that the steel crossbeams have a cross-section of 'I' form which is smaller than the 'I' cross-section of the main longitudinal beams.

6. A weighbridge as claimed in any one of the claims 1 to 5 inclusive provided with a number of extending prefabricated concrete tracks having a smaller width than that of the weighbridge and characterised in that the extending concrete tracks are arranged on the steel crossbeams to form a lane and which tracks (7,8) lie with the outer longitudinal sides (7a,8a) against the inner sides of the extending main beams (3,4) respectively.

7. A weighbridge as claimed in any one of the foregoing claims 1 to 6 inclusive and characterised in that the extending prefabricated tracks (7,8) have extending recesses (7c,8c) on the innermost upper longitudinal sides (7b, 8b) for accomdating steel gratings (9) for making inspection and maintenance possible.

8. A weighbridge as claimed in any one of the claims 1 to 7 inclusive and characterised in that the steel gratings (9) are supported by the steel angle-sections cast into the recesses (7c, 8c).

9. A weighbridge as claimed in any one of claims 1 to 8 inclusive characterised in that the short prefabricated concrete foundation elements (1) of 'U' form cross-section arranged on the bridge platform have legs of unequal length and in which the outermost leg (1a) lies with its uppermost side flush with the uppermost sides (7e,8e) of the concrete tracks (7,8).

10. A weighbridge as claimed in any one of claims 1 to 9 inclusive characterised in that an extension (1c) is arranged on the outermost ends of the outermost concrete foundation elements (1) to serve as tracks for a ride-on/ride-off ramp (10).

11. A weighbridge as claimed in claim 10 characterised in this that a latch-element (1d) is provided on the extending portion (1c)for latching into a corresponding latching element (10a) on the underside of the innermost end of the prefabricated ride-on/ride-off ramp (10).

12. A weighbridge as claimed in any one of the foregoing claims 1 to 11 inclusive and characterised in this that the prefabricated concrete ride-on/ride-off ramps (10) have a longitudinal cross-section of a right-angled trapezium the base (10b) of which is placed on the ground whilst the upperside of the short right-angled side (10c) is flush with uppermost side (1a) of both the long leg of the outermost foundation element (1) and the uppermost sides of the concrete tracks (7,8).

## Revendications

1. Pont-bascule préfabriqué et démontable pour peser des véhicules, comprenant une plateforme assemblée à partir d'éléments (7, 8) et de rampes (10) en béton, préfabriqués au moins en partie, et installés sur une aire d'activité, dans lequel plusieurs éléments de fondation (1, 2) courts préfabriqués en béton sont disposés à intervalles réguliers (L) sur une couche de fondation (F1, F2), une structure de support (3, 4, 5) en acier reposant sur lesdits éléments de fondation (1, 2) et les éléments (7, 8) étant placés dans ladite structure (3, 4, 5), et dans lequel des moyens de pesage sont logés entre le dessous de la structure (3, 4, 5) et le dessus des éléments de fondation (1, 2).

2. Pont-bascule selon la Revendication 1, *caractérisé en ce que* la structure de support (2, 3, 4, 5) est un portique assemblé à partir de deux poutrelles maîtresses longitudinales en acier (3, 4) disposées sur chaque côté des éléments de fondation (1, 2) en béton et plusieurs poutrelles transversales (5) en acier fixées à intervalles réguliers (S) entre les poutrelles longitudinales principales (3, 4).

3. Pont-bascule selon la Revendication 1 ou 2, *caractérisé en ce que* les éléments de fondation (1, 2) courts préfabriqués en béton ont une section longitudinale en forme de U.

4. Pont-bascule selon l'une quelconque des Revendications 1 à 3, *caractérisé en ce que* les poutrelles maîtresses longitudinales en acier (3, 4) ont une section transversale en forme de I.

5. Pont-bascule selon l'une quelconque des Revendications précédentes, *caractérisé en ce que* les poutrelles transversales en acier ont une section transversale en forme de I qui est inférieure à la section transversale en forme de I des poutrelles maîtresses longitudinales en acier.

6. Pont-bascule selon l'une quelconque des Revendications 1 à 5 muni de plusieurs voies longitudinales de roulement préfabriquées en béton ayant une largeur inférieure à celle du pont-bascule et *caractérisé en ce que* les voies de roulement reposent sur les poutrelles transversales en acier en formant un chemin, lesdites voies de roulement (7, 8) ayant leurs flancs longitudinaux extérieurs (7a, 8a) en appui respectivement contre les flancs intérieurs des poutrelles maîtresses longitudinales (3, 4).

7. Pont-bascule selon l'une quelconque des Revendications 1 à 6, *caractérisé en ce que* les voies longitudinales de roulement (7, 8) préfabriquées présentent des évidements longitudinaux (7c, 8c) dans les faces longitudinales supérieures les plus internes (7b, 8b) destinés à recevoir des grilles (9) en acier pour permettre l'inspection et l'entretien.

8. Pont-bascule selon l'une quelconque des Revendications 1 à 7, *caractérisé en ce que* les grilles (9) en acier prennent appui sur les cornières en acier scellées dans les évidements (7c, 8c).

9. Pont-bascule selon l'une quelconque des Revendications 1 à 8, *caractérisé en ce que* les éléments de fondation (1) courts préfabriqués en béton de section en forme de "U" disposés sur la plate-forme du pont ont des branches de longueur inégale et dans lesquelles la branche située la plus à l'extérieur (1a) repose avec son flanc le plus haut de niveau avec les côtés les plus hauts (7, 8e) des voies de roulement (7, 8) en béton.

10. Pont-bascule selon l'une quelconque des Revendications 1 à 9, *caractérisé en ce qu'*un prolongement (1c) est disposé sur les extrémités les plus extérieures des éléments de fondation (1) en béton les plus extérieurs pour servir de support à une rampe (10) d'accès.

11. Pont-bascule selon la Revendication 10, *caractérisé en ce qu'*un élément d'accrochage (1d) est prévu sur la partie saillante (1c) pour se solidariser avec un élément d'accrochage correspondant (10a) situé sur le dessus de l'extrémité la plus intérieure de la rampe (10) d'accès préfabriquée.

12. Pont-bascule selon l'une quelconque des Revendications 1 à 11, *caractérisé en ce que* les rampes (10) d'accès préfabriquées ont une section longitudinale de trapèze rectangle dont la base (10b) est placée sur le sol alors que la face supérieure du côté court (10c) de l'angle droit est de niveau à la fois avec la face la plus à l'extérieur (1a) de la branche longue de l'élément de fondation le plus à l'extérieur (1) et les faces les plus à l'extérieur des voies de roulement (7, 8) en béton.

## Patentansprüche

1. Vorgefertigte und abbaubare Brückenwaage zum Wiegen von Fahrzeugen mit einer Plattform, die aus wenigstens teilweise vorgefertigten Betonteilen (7, 8) und Rampen (10) besteht, die auf einem Arbeitsboden angeordnet sind, wobei eine Anzahl von kurzen vorgefertigten Beton-Basiselementen (1, 2) in regelmäßigen Abständen auf einer Fundamentschicht (F1, F2) angeordnet ist, wobei auf der Fundamentschicht (1, 2) eine Stahlstützkonstruktion (3, 4, 5) angeordnet ist, wobei die Teile (7, 8) in der Konstruktion (3, 4, 5) angeordnet sind, und wobei die Wiegevorrichtung zwischen der Unterseite der Konstruktion (3, 4, 5) und der Oberseite der Basiselemente (1, 2) untergebracht ist.

2. Brückenwaage nach Anspruch 1, dadurch gekennzeichnet, daß die Stützkonstruktion (2, 3, 4, 5) ein aus zwei Hauptlängsträgern (3, 4) aufgebautes Rahmenwerk ist, die auf jeder Seite der Beton-Basiselemente (1, 2) angeordnet sind, wobei eine Anzahl von Stahlquerträgern (5), die in gleichmäßigen Abständen S zwischen den Hauptlängsträgern (3, 4) befestigt sind.

3. Brückenwaage nach Anspruch 1 oder 2, dadurch gekennzeichnet, daß die kurzen vorgefertigten Beton-Basiselemente (1, 2) einen Längsquerschnitt in "U"-Form haben.

4. Brückenwaage nach einem der Ansprüche 1 bis 3, dadurch gekennzeichnet, daß die Hauptlängsträger (3, 4) aus Stahl einen Querschnitt in "I"-Form haben.

5. Brückenwaage nach einem der vorhergehenden Ansprüche, dadurch gekennzeichnet, daß die Stahlquerträger einen Querschnitt in "I"-Form haben, der kleiner ist als der "I"-Querschnitt der Hauptlängsträger.

6. Brückenwaage nach einem der Ansprüche 1 bis 5, die eine Anzahl von ausziehbaren vorgefertigten Betonfahrspuren mit geringerer Breite als die der Brückenwaage aufweist, dadurch gekennzeichnet, daß die ausziehbaren Betonfahrspuren auf den Stahlquerträgern angeordnet sind, um eine Fahrbahn zu bilden, und die Fahrspuren (7, 8) mit den äußern Längsseiten (7a, 8a) jeweils an den Innenseiten der ausziehbaren Hauptträger (3, 4) anliegen.

7. Brückenwaage nach einem der vorhergehenden Ansprüche 1 bis 6, dadurch gekennzeichnet, daß die ausziehbaren vorgefertigten Fahrspuren (7, 8) an den innersten oberen Längsseiten (7b, 8b) sich erstreckende Aussparungen (7c, 8c) zur Aufnahme von Stahlrosten (9) aufweisen, die eine Inspektion und Wartung erlauben.

8. Brückenwaage nach einem der Ansprüche 1 bis 7, dadurch gekennzeichnet, daß die Stahlroste (9) durch die in die Aussparungen (7c, 8c) eingebrachten Stahlwinkelteile getragen werden.

9. Brückenwaage nach einem der Ansprüche 1 bis 8, dadurch gekennzeichnet, daß die kurzen vorgefertigten Beton-Basisteile (1) mit "U"-förmigem Querschnitt, die auf der Brückenplattform angeordnet sind, ungleich lange Schenkel haben, wobei der äußerste Schenkel (1a) mit seiner obersten Kante mit den obersten Kanten (7e, 8e) der Betonfahrspuren (7, 8) fluchtet.

10. Brückenwaage nach einem der Ansprüche 1 bis 9, dadurch gekennzeichnet, daß an den äußersten Enden der äußersten Beton-Basiselemente (1) eine Verlängerung (1c) angeordnet ist, die als Fahrspuren für eine Auffahr-/Abfahr-Rampe (10) dient.

11. Brückenwaage nach Anspruch 10, dadurch gekennzeichnet, daß an der Verlängerung (1c) ein Rastelement (1d) zum Einrasten in ein entsprechendes Rastelement (10a) auf der Unterseite des innersten Endes der vorgefertigten Auffahr-/Abfahr-Rampe (10) vorgesehen ist.

12. Brückenwaage nach einem der vorhergehenden Ansprüche 1 bis 11, dadurch gekennzeichnet, daß die vorgefertigten Auffahr-/Abfahr-Rampen (10) einen Längsquerschnitt in Form eines rechtwinkligen Trapezes haben, dessen Basis (10b) auf dem Boden angeordnet ist, während die obere Kante der kurzen rechtwinkligen Seite (10c) mit der obersten Kante (1a) der beiden langen Schenkel des äußersten Basiselements (1) und den obersten Kanten der Betonfahrspuren (7, 8) fluchtet.

# Fig.1.

# Fig.2.

EP 0 321 608 B1